# EUROPÄISCHE PATENTSCHRIFT

(11) **EP 2 278 199 B1**
(45) Veröffentlichungstag und Bekanntmachung des Hinweises auf die Patenterteilung: **14.12.2011**
(21) Anmeldenummer: 09166225.4
(22) Anmeldetag: 23.07.2009
(51) Int. Cl.: F16K 1/38, F16K 31/50

(54) **Verbessertes Absperrventil**
Improved blocking valve
Soupape d'arrêt améliorée

(43) Veröffentlichungstag der Anmeldung: 26.01.2011
(73) Patentinhaber: Stanic, Miodrag, 11070 Beograd (RS); Stanic, Milos, 11070 Beograd (RS)
(72) Erfinder: Stanic, Miodrag, 11070 Beograd (RS); Stanic, Milos, 11070 Beograd (RS)
(74) Vertreter: Hohgardt, Martin

(56) Entgegenhaltungen:
- WO-A-88/01704
- WO-A-99/05437
- WO-A-2005/083309
- CH-A- 388 051
- DE-A1- 3 842 565
- DE-B3-102005 016 932
- GB-A- 2 285 113
- US-A- 6 062 540

## Beschreibung

Die vorliegende Erfindung betrifft ein Absperrventil für Fluide, aufweisend ein Ventilgehäuse, einen an einem Ende des Ventilgehäuses angeordneten Ventilsitz, einen Ventilkolben und einen den Ventilkolben aufnehmenden Kolbenträger, wobei der Kolbenträger mittels einer Spindel axial in dem Ventilgehäuse verschiebbar ist, wobei zumindest das Ventilgehäuse, der Ventilkolben, der Ventilsitz und der Kolbenträger aus Kunststoff bestehen und wobei der Kolbenträger derart die Innenwand des Ventilgehäuses kontaktiert, dass er bei Überschreiten eines bestimmten Drehmoments eine radiale Bewegung ausführt.

Absperrventile werden für gewöhnlich zur Regulierung der Durchflussmenge von Fluiden verwendet. Absperrventile werden zum Beispiel in Wasserhähne eingebaut, um es dem Anwender zu ermöglichen, den Wasserdurchfluss wie gewünscht zu regulieren oder ganz zu unterbinden.

Bekannte Absperrventile bestehen aus einem Ventilgehäuse, einer Spindel und einem Dichtungsträger. Im Allgemeinen sind alle Komponenten solcher Absperrventile - bis auf die Dichtungen - aus Messing gefertigt. Die Spindel ist in einer Öffnung des Ventilgehäuses angeordnet, so dass an dem sich außerhalb des Ventilgehäuses befindlichen Teil der Spindel ein Knauf angebracht werden kann, welcher das von einem Benutzer ausgeübte Drehmoment auf die Spindel überträgt. An dem innerhalb des Ventilgehäuses angeordneten Teil der Spindel ist die Spindel in der Form eines Außengewindes geformt. Die Spindel wird für gewöhnlich mit einem Sicherungs- oder Nutenring so an dem Ventilgehäuse fixiert, dass sie sich relativ zu dem Ventilgehäuse nicht in axialer Richtung bewegen kann. Der Dichtungsträger ist ebenfalls innerhalb des Ventilgehäuses angeordnet und an einem Ende in der Form eines Innengewindes geformt, in welches sich das Außengewinde der Spindel hineinschrauben lässt. Außerdem weist dieses Ende des Dichtungsträgers einen im Allgemeinen quadratischen Querschnitt auf. Das Ventilgehäuse weist eine dazu passende quadratische Ausnehmung auf, in welcher der Dichtungsträger gleiten, d.h. sich vor und zurück bewegen kann. Eine radiale Bewegung des Dichtungsträgers relativ zu dem Ventilgehäuse wird durch die quadratischen Querschnitte verhindert. Das Vor- und Zurückbewegen des Dichtungsträgers wird verursacht durch Drehen der Spindel und durch das Zusammenspiel der Gewinde von Spindel und Dichtungsträger.

Der Dichtungsträger weist an seinem anderen Ende einen Dichtungsgummi in Form einer Halbkugel auf. Der Dichtungsträger kann, wie oben beschrieben, mittels der Spindel vor und zurück bewegt werden. Im eingebauten Zustand ist das Absperrventil geschlossen, wenn kein Fluid durch das Absperrventil strömt. Dieser geschlossene Zustand wird erreicht, indem der Dichtungsträger mittels der Spindel soweit in Richtung der Strömungsrichtung des Fluids bewegt wird, bis der Dichtungsgummi in Form einer Halbkugel eine Öffnung eines Rohres, aus welcher das Fluid austritt, verschließt. Das Absperrventil befindet sich im geöffneten Zustand, wenn der Dichtungsträger mittels der Spindel entgegen der Strömungsrichtung des Fluids so weit bewegt wird, bis ein Spalt zwischen der Öffnung in dem Rohr entsteht, durch welchen das Fluid strömen kann.

Solche bekannten Absperrventile weisen jedoch mehrere Nachteile auf. Messing korrodiert insbesondere beim Kontakt mit Feuchtigkeit relativ schnell, so dass einzelne Komponenten des Absperrventils oder das gesamte Absperrventil nach relativ kurzer Zeit ausgetauscht werden müssen. Auch ist ein regelmäßiges Schmieren der beweglichen Komponenten mit Öl oder Fett notwendig, um die Leichtgängigkeit der beweglichen Komponenten aufrechtzuerhalten.

Ein schwerwiegender Nachteil ist auch darin zu sehen, dass die Gummidichtung relativ leicht durch den Benutzer beschädigt werden kann oder sich in verhältnismäßig kurzer Zeit von selbst abnutzt. Der Grund dafür ist, dass die halbkugelförmige Gummidichtung auf dem Dichtungsträger im geschlossenen Zustand des Absperrventils an der Öffnung des Rohres anliegt, aus welchem das Fluid austritt. Diese Öffnung hinterlässt einen Abdruck in Form einer umlaufenden Rinne auf der halbkugelförmigen Gummidichtung, was zur Folge hat, dass die Gummidichtung die Öffnung nicht mehr vollständig verschließt und Fluid durch die Öffnung tritt, selbst wenn das Absperrventil vollständig geschlossen ist. Dort, wo das Fluid durch die Öffnung tritt, kann die Gummidichtung weiter beschädigt werden, weil sich aufgrund des Fluiddrucks ein kleiner Strahl von Fluid in die Gummidichtung schneidet. Der Benutzer versucht der Undichtigkeit des Absperrventils entgegenzuwirken, indem er weiter an der Spindel dreht, um den Dichtungsträger und damit die Gummidichtung mit stärkerem Druck auf die Öffnung des Rohres zu pressen. Hierdurch wird die Gummidichtung noch weiter beschädigt. Die Folge ist, dass die Gummidichtung in relativ kurzen Zeitabständen ausgetauscht werden muss.

Um insbesondere dem oben beschriebenen Nachteil der Korrosionsanfälligkeit von Messing entgegenzutreten, sind Absperrventile mit Komponenten aus Kunststoff entwickelt worden. Diese Absperrventile aus Kunststoff weisen jedoch statt des oben beschriebenen Dichtungsträgers einen Ventilkolben auf. Dieser Ventilkolben sitzt auf einem Kolbenträger, welcher - wie der oben beschriebene Dichtungsträger - in dem Ventilgehäuse mittels der Spindel vor und zurück bewegt werden kann. Der Ventilkolben ist an dem Ende, welches der Spindel entgegengesetzt ist, in Form einer kegelförmigen Verbreiterung geformt. Der Ventilkolben ist in der mit einem Dichtungsgummi versehenen Öffnung eines so genannten Ventilsitzes angeordnet. Im geschlossenen Zustand des Absperrventils stößt die kegelförmige Verbreiterung des Ventilkolbens gegen die Dichtung in der Öffnung des Ventilsitzes und verschließt diese dadurch. Durch Drehen der Spindel wird der Kolbenträger und damit der Ventilkolben in axialer Richtung bewegt, so dass die kegelförmige Verbreiterung entgegen der Strömungsrichtung des Fluids von der Öffnung in dem Ventilsitz abgehoben wird und ein Spalt zwischen der kegelförmigen Verbreiterung und der Öffnung in dem Ventilsitz entsteht. Im Unterschied zu dem oben beschriebenen Typ Absperrventil, werden diese Absperrventile aus Kunststoff also gegen die Strömungsrichtung des Fluids geöffnet. Im geöffneten Zustand des Absperrventils fließt das Fluid um den Ventilkolben herum durch die Öffnung des Ventilsitzes und tritt hinter dem Ventilsitz durch geeignete Öffnungen aus dem Absperrventil aus.

Die hier beschriebenen Absperrventile aus Kunststoff weisen einen Mechanismus zwischen den drehbaren Teilen des Absperrventils auf, durch den das auf die Mechanik des Absperrventils wirkende Drehmoment begrenzt wird. Dieser Mechanismus wird beispielsweise dadurch realisiert, dass der Kolbenträger die Innenwand des Ventilgehäuses derart kontaktiert, dass der Kolbenträger beim Überschreiten eines bestimmten Drehmoments eine radiale Bewegung ausführt. Übt der Anwender auf die Spindel eines solchen Absperrventils ein höheres Drehmoment aus als werksseitig durch Auslegung des Mechanismus vorgegeben, so dreht sich der an die Spindel montierte Knauf weiter, ohne dass die Mechanik des Absperrventils Schaden nimmt. Ein derartiger Mechanismus verhindert daher eine irreversible Beschädigung des Absperrventils beim Gebrauch. Da beim Ausüben eines hohen Drehmoments der Kolbenträger im Ventilgehäuse rutscht, wird ein derartiger Mechanismus auch als Rutschkupplung bezeichnet.

Absperrventile wie oben beschrieben sind zum Beispiel aus DE 38 42 565 und WO 88/01704 bekannt.

Da - wie oben beschrieben - das Fluid bei geöffnetem Absperrventil den Ventilkolben umströmt, kann der Ventilkolben zu ungewünschten Vibrationen angeregt werden, welche sich einerseits als unangenehme Geräusche bemerkbar machen und andererseits die Lebensdauer des Absperrventils verkürzen. Nachteilig ist bei derartigen Absperrventilen auch, dass der Ventilkolben die Dichtung in der Öffnung des Ventilsitzes im geschlossenen Zustand des Absperrventils nicht in optimaler Weise kontaktiert. Dies hat zum einen den Nachteil, dass das Absperrventil nicht vollständig dicht ist, d.h. dass im geschlossenen Zustand Fluid durch die Öffnung in dem Absperrventil gelangen kann. Zum anderen kann trotz Rutschkupplung die Dichtung mit der Zeit beschädigt werden, so dass ein Austauschen der Dichtung notwendig wird. Schließlich sind die beschriebenen Absperrventile aus Kunststoff bauartbedingt relativ lang, da sie den Ventilsitz aufweisen, in welchem der Ventilkolben angeordnet ist und können deshalb nur bei Wasserhähnen mit relativ viel Platz für das Ventil verwendet werden.

Aufgabe der vorliegenden Erfindung ist es daher die oben beschriebenen bekannten Absperrventile dahingehend zu verbessern, dass deren Nachteile beseitigt werden.

Erfindungsgemäß wird diese Aufgabe gelöst durch ein Absperrventil gemäß Anspruch 1. Vorteilhafte Weiterbildungen ergeben sich aus den Unteransprüchen.

Das erfindungsgemäße Absperrventil für ein Fluid weist ein Ventilgehäuse, einen Ventilkolben, einen an einem Ende des Ventilgehäuses angeordneten Ventilsitz und einen den Ventilkolben aufnehmenden Kolbenträger auf, wobei der Kolbenträger mittels einer Spindel axial in dem Ventilgehäuse verschiebbar ist, wobei zumindest das Ventilgehäuse, der Ventilkolben, der Ventilsitz und der Kolbenträger aus Kunststoff bestehen und wobei der Kolbenträger derart die Innenwand des Ventilgehäuses kontaktiert, dass er bei Überschreiten eines bestimmten Drehmoments eine radiale Bewegung ausführt. Auf dem Ventilkolben ist eine ringförmige Dichtung angeordnet, welche mit einem abgeschrägten Rand einer Öffnung in dem Ventilsitz derart zusammenwirkt, dass das Fluid am Durchströmen der Öffnung gehindert wird, wenn sich der Ventilkolben in einer Endstellung befindet, und dass der Ventilkolben eine Ausnehmung aufweist, welche ein Ende der Spindel aufnehmen kann, und der Kolbenträger an einem Ende, welches dem Ventilkolben zugewandt ist, eine Öffnung aufweist, durch welche das Ende der Spindel sich in die Ausnehmung des Ventilkolbens bewegen kann.

Dadurch, dass die Spindel sich zumindest teilweise in die Ausnehmung in dem Ventilkolben bewegen kann, wird eine kompakte Bauweise des gesamten Absperrventils erzielt.

Durch das erfindungsgemäße Absperrventil wird ein Absperrventil bereitgestellt, bei welchem insbesondere durch die Anordnung der ringförmigen Dichtung auf dem Ventilkolben im Zusammenspiel mit dem abgeschrägten Rand der Öffnung in dem Ventilsitz die Dichtigkeit des Absperrventils verbessert und die Langlebigkeit der Dichtung erhöht wird. Diese Vorteile werden insbesondere dadurch erzielt, dass die Dichtung auf dem Ventilkolben bei geschlossenem Absperrventil gleichmäßig auf dem abgeschrägten Rand der Öffnung in dem Ventilsitz anliegt. Der abgeschrägte Rand der Öffnung in dem Ventilsitz wirkt zentrierend für den Ventilkolben und sorgt dafür, dass sich über den gesamten Umfang der Dichtung ein konstanter Anpressdruck ergibt, welcher die Öffnung sicher verschließt. Im Querschnitt betrachtet kontaktiert der abgeschrägte Rand die ringförmige Dichtung tangential und beim Schließen des Absperrventils wird auf die Dichtung nur eine Kraft rechtwinklig zu dieser Tangente ausgeübt, wodurch die Dichtung gleichmäßig - ohne Scher- oder Torsionskräfte - zusammendrückt wird, ohne dass es zu plastischen Verformungen in Form von Rinnen oder Druckstellen kommt, welche zu Undichtigkeiten führen könnten.

Der Ventilkolben ist bei geöffnetem Absperrventil nicht in der Öffnung des Ventilsitzes angeordnet, wie es bei dem oben beschriebenen Typ Absperrventil aus Kunststoff der Fall ist, wodurch der Ventilkolben und damit das gesamte Absperrventil relativ kurz ausgeführt werden kann. Auch umströmt das Fluid bei geöffnetem Absperrventil den Ventilkolben nicht, wodurch Vibrationen des Ventilkolbens vermieden werden.

In einer vorteilhaften Weiterbildung des erfindungsgemäßen Absperrventils weist der abgeschrägte Rand der Öffnung in dem Ventilsitz die Form einer Mantelfläche eines Kegelstumpfs auf.

Diese spezielle Form ist einfach realisierbar und sorgt für eine hohe Dichtigkeit des Absperrventils.

In einer weiteren vorteilhaften Weiterbildung des erfindungsgemäßen Absperrventils bildet der Normalenvektor der Mantelfläche einen Winkel zwischen 30° und 60° mit der Drehachse des Absperrventils.

Dieser Winkelbereich hat sich als vorteilhaft für die Dichtigkeit und Lebensdauer des Absperrventils herausgestellt.

In einer weiteren vorteilhaften Weiterbildung des erfindungsgemäßen Absperrventils bildet der Normalenvektor der Mantelfläche einen Winkel von 45° mit der Drehachse des Absperrventils.

In einer weiteren vorteilhaften Weiterbildung des erfindungsgemäßen Absperrventils weist die ringförmige Dichtung die Form eines Torus auf.

Dichtungen in Torus-Form lassen sich relativ einfach herstellen. Außerdem gewährleistet diese Form z.B. gegenüber Dichtungen mit rechteckigem Querschnitt, eine erhöhte Dichtigkeit und Lebensdauer, da bei geschlossenem Absperrventil der Druck, welchen der abgeschrägte Rand auf die Dichtung ausübt, gleichmäßig über den Querschnitt der Dichtung verteilt wird.

In einer weiteren vorteilhaften Weiterbildung des erfindungsgemäßen Absperrventils ist der Ventilkolben mit dem Kolbenträger derart verbunden, dass sie sich gegeneinander verdrehen lassen.

Durch die drehbare Verbindung von Ventilkolben und Kolbenträger wird erreicht, dass sich der Ventilkolben nicht mit dem Kolbenträger mitdreht, wenn der Kolbenträger beim Überschreiten eines bestimmten Drehmoments eine radiale Bewegung ausführt. Würde sich hingegen auch der Kolbenträger mitdrehen, so würden Dichtungen, welche zwischen dem Ventilkolben und der Innenseite des Ventilgehäuses angeordnet sind, sich gegen die Innenseite des Ventilgehäuses bewegen und schnell verschleißen.

In einer weiteren vorteilhaften Weiterbildung des erfindungsgemäßen Absperrventils ist der Kolbenträger an einem Ende als Kranz mit einem umlaufenden Vorsprung geformt und der Ventilkolben ist an einem Ende in Form von Zungen geformt, welche mit dem umlaufenden Vorsprung an dem Kranz an dem Ende des Kolbenträgers derart zusammenwirken, dass eine drehbare Verbindung zwischen dem Ventilkolben und dem Kolbenträger gegeben ist.

Durch diese Art der Verbindung wird eine Schnappverbindung zwischen dem Ventilkolben und dem Kolbenträger realisiert, wodurch die Montage des Absperrventils vereinfacht wird.

In einer weiteren vorteilhaften Weiterbildung des erfindungsgemäßen Absperrventils weist das Ventilgehäuses eine Öffnung auf, an der Zungen ausgebildet sind, welche derart elastisch sind, dass die Spindel beim Zusammenbau zumindest teilweise durch die Öffnung des Ventilgehäuses geschoben werden kann und die Zungen im eingeschobenen Zustand der Spindel mit einem umlaufenden Vorsprung an der Spindel derart zusammenwirken, dass eine axiale Bewegung der Spindel in das Ventilgehäuse hinein verhindert wird, d.h. die Spindel wird in axialer Richtung auf einfache Art und Weise fixiert. Durch das einfache Zusammenwirken der Zungen mit dem umlaufenden Vorsprung entfällt das externe Fixieren der Spindel zum Beispiel durch einen Sicherungs- oder Nutenring. Dies vereinfacht den Zusammenbau des Absperrventils. Darüber hinaus verschleißt das Ventilgehäuse aus Kunststoff nicht durch die Reibung eines härteren Sicherungs- oder Nutenrings aus Metall.

In einer weiteren vorteilhaften Weiterbildung des erfindungsgemäßen Absperrventils besteht die Spindel aus zwei Teilen, wobei das erste Teil zumindest teilweise aus dem Ventilgehäuse herausragt und aus Messing besteht und das zweite Teil den Kolbenträger in dem Ventilgehäuses kontaktiert und aus Kunststoff besteht und wobei die zwei Teile derart miteinander verbunden sind, dass sie sich nicht gegeneinander verdrehen lassen.

Messing ist im Allgemeinen härter als Kunststoff, weshalb beim Anbringen eines Knaufes, welcher für das härtere Material Messing vorgesehen ist, eine Spindel, welche vollständig aus Kunststoff bestünde, beschädigt werden könnte. Eine vollständig aus Kunststoff gefertigte Spindel könnte sich soweit abnutzen, dass der Knauf an der Spindel keinen ausreichenden Halt findet und "durchdreht". Einige handelsübliche Knäufe werden zusätzlich mit einer Schraube aus Metall an der Spindel fixiert. Bei einer vollständig aus Kunststoff bestehenden Spindel könnte diese beim Festdrehen der Schraube erheblich beschädigt und deformiert werden, so dass der Knauf nicht wie gewünscht an der Spindel fixiert wird. Da der aus dem Ventilgehäuse hervorragende erste Teil der Spindel aus Messing gefertigt ist, macht das Absperrventil als ganzes einen höherwertigen Eindruck, insbesondere, weil im Allgemeinen von dem gesamten Absperrventil im Wesentlichen nur dieses aus Messing gefertigte erste Teil der Spindel zu sehen ist, wenn das Absperrventil zum Beispiel in einem Wasserhahn verbaut ist.

In einer weiteren vorteilhaften Weiterbildung des erfindungsgemäßen Absperrventils ist das Ventilgehäuse aus einem Stück gefertigt.

Gegenüber den bekannten Absperrventilen, bei denen z.B. die Auslassöffnungen für das Fluid in einer separaten Komponente gebildet werden, welche auf das Ventilgehäuse aufgesetzt wird, wird durch die einteilige Ausführung die Anzahl der Teile reduziert und der Zusammenbau des Absperrventils beschleunigt.

In einer weiteren vorteilhaften Weiterbildung des erfindungsgemäßen Absperrventils weist das Ventilgehäuse Auslassöffnungen für das Fluid auf.

Weitere Vorteile der Erfindung werden in der nachfolgenden detaillierten Beschreibung ersichtlich, in welcher die Erfindung anhand der Figuren erläutert wird.

In den Figuren zeigt:
- Fig. 1: einen Querschnitt eines Ausführungsbeispiels eines erfindungsgemäßen Absperrventils,
- Fig. 2: eine Ansicht der Spindel des Ausführungsbeispiels von Fig. 1,
- Fig. 3: einen teilweisen Querschnitt durch den Kolbenträger des Ausführungsbei- spiels von Fig. 1 und
- Fig. 4: einen Querschnitt durch den Ventilkolben des Ausführungsbeispiels von Fig. 1.

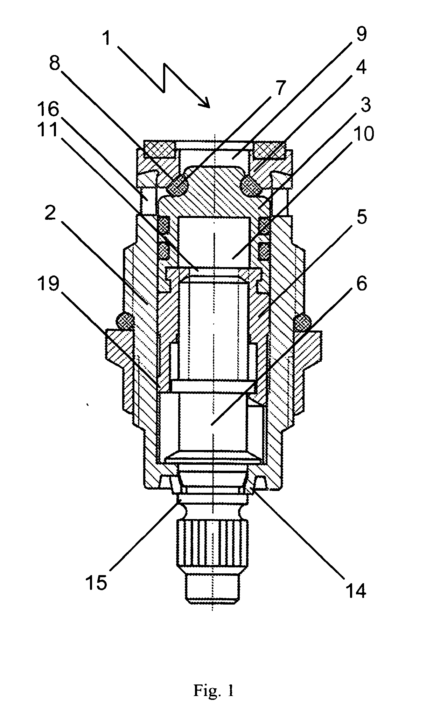

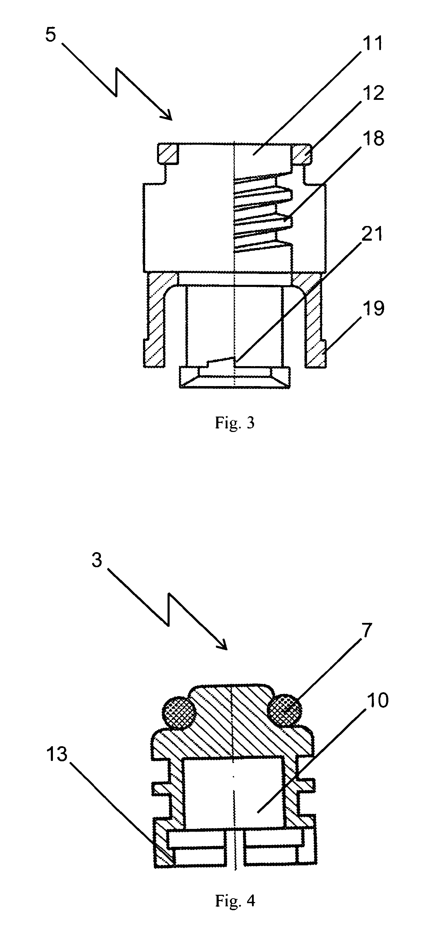

Ein Ausführungsbeispiel eines erfindungsgemäßen Absperrventils 1 ist in Fig. 1 im Querschnitt gezeigt. Das Absperrventil 1 weist ein Ventilgehäuse 2 auf. Dieses Ventilgehäuse 2 ist erfindungsgemäß aus Kunststoff gefertigt. In dem Ventilgehäuse 2 sind ein Ventilkolben 3 und ein Kolbenträger 5 angeordnet. Der Kolbenträger 5 ist so ausgestaltet, dass er den Ventilkolben 3 aufnehmen kann. Bei dem in Fig. 1 gezeigten Ausführungsbeispiel erfolgt diese Aufnahme mittels einer formschlüssigen Verbindung. Dazu ist der Kolbenträger 5 an dem dem Ventilkolben 3 zugewandten Ende als Kranz mit einem umlaufenden Vorsprung 12 geformt (vgl. Fig. 3). Der Ventilkolben weist an der dem Kolbenträger 5 zugewandten Seite eine diesem Kranz entsprechende Aufnahme mit elastischen Zungen 13 auf (vgl. Fig. 4), welche über den Kranz geschoben werden, so dass eine Verbindung in der Art einer Schnappverbindung zwischen Ventilkolben 3 und Kolbenträger 5 entsteht. Durch diese Schnappverbindung wird eine in axialer Richtung belastbare Verbindung zwischen Kolbenträger 5 und Ventilkolben 3 geschaffen. Der Kolbenträger 5 ist wie das Ventilgehäuse 1 aus Kunststoff gefertigt.

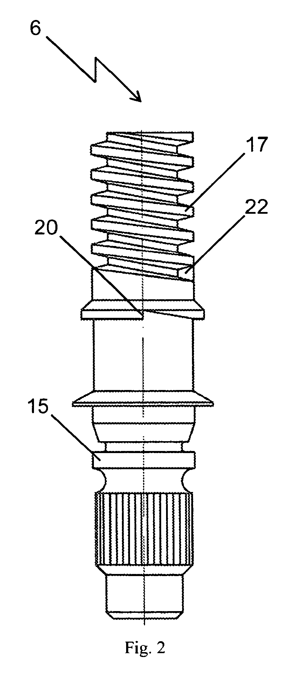

Der Kolbenträger 5 kann mit Hilfe einer Spindel 6 vor und zurück bewegt werden. In dem vorliegenden Ausführungsbeispiel weist die Spindel 6 hierfür ein Außengewinde 17 (vgl. Fig. 2) auf, welches in ein Innengewinde 18 des Kolbenträgers 5 (vgl. Fig. 3) so eingreift, dass eine Drehung der Spindel 6 zu einer axialen Verschiebung des Kolbenträgers 5 in dem Ventilgehäuse 2 führt. Um ein Mitdrehen des Kolbenträgers 5 zu verhindern und gleichzeitig das auf den Kolbenträger 5 wirkende Drehmoment zu begrenzen, ist zwischen dem Kolbenträger 5 und der Innenwand des Ventilgehäuses 2 eine Rutschkupplung vorgesehen. Diese ist in dem in Fig. 1 gezeigten Ausführungsbeispiel derart ausgestaltet, dass der Kolbenträger 5 außenwandig Vorsprünge 19 aufweist, welche in zugeordneten Ausnehmungen in der Innenwand des Ventilgehäuses 2 axial gleiten, d.h. sich in axialer Richtung vor und zurück bewegen. Bei Überschreiten eines bestimmten Drehmoments werden die Vorsprünge 19 jeweils von der derzeitigen Ausnehmung zu einer benachbarten Ausnehmung bewegt, so dass der Kolbenträger 5 eine radiale Bewegung ausführt. Auf diese Weise wird das Drehmoment, welches auf den Kolbenträger 5 wirkt, in der Art einer Rutschkupplung begrenzt.

Das in Fig. 1 gezeigt Ausführungsbeispiel des erfindungsgemäßen Absperrventils weist ferner einen Ventilsitz 4 auf. Dieser ist an einem Ende des Ventilgehäuses 2 angeordnet, d.h. er stößt an diesem Ende an das Ventilgehäuse, und weist eine Öffnung 9 auf. Der Rand 8 der Öffnung 9 ist abgeschrägt. In dem in Fig. 1 gezeigten Ausführungsbeispiel weist der abgeschrägte Rand 8 die Form einer Mantelfläche eines Kegelstumpfes auf. Der Normalenvektor der Mantelfläche bildet mit der Drehachse des Absperrventils 2 einen Winkel von 45°. Andere Formen und Winkel sind jedoch auch denkbar.

Auf dem Ventilkolben des in Fig. 1 gezeigten Ausführungsbeispiels ist eine ringförmige Dichtung 7 angeordnet. Diese hat bei dem gezeigten Ausführungsbeispiel die Form eines Torus und liegt derart in einer entsprechenden umlaufenden Mulde in dem Ventilkolben, dass sie von dem Ventilkolben nicht abfallen kann. Die ringförmige Dichtung kann z.B. aus Gummi gefertigt sein.

Im geschlossenen Zustand des Absperrventils 1 sitzt das Ende des Ventilkolbens 3, an welchem sich die Dichtung 7 befindet, passgenau auf der Öffnung 9 des Ventilsitzes 4, so dass kein Fluid durch die Öffnung 9 und damit durch das Absperrventil 1 strömen kann. Die auf dem Ventilkolben 3 angeordnete Dichtung 7 sorgt dabei durch das Zusammenspiel mit dem abgeschrägten Rand 8 der Öffnung 9 in dem Ventilsitz 4 für die notwendige Dichtigkeit.

Dreht der Anwender über einen an der Spindel 6 angebrachten Knauf die Spindel 6, so wird diese Drehbewegung durch das Zusammenspiel der Spindel 6, des Kolbenträgers 5 und des Ventilgehäuses 2 in eine axiale Bewegung des Kolbenträgers 5 relativ zu dem Ventilgehäuse 2 überführt. Dadurch bewegt sich auch der an dem Kolbenträger 5 angebrachte Ventilkolben 3 in axialer Richtung und das Ende des Ventilkolbens 3 wird von der Öffnung 9 des Ventilsitzes 4 abgehoben, so dass ein Spalt zwischen der Öffnung 9 und dem Ende des Ventilkolbens 3 entsteht. Durch diesen Spalt kann Fluid durch das Absperrventil 1 fließen. Das Fluid verlässt das Absperrventil 1 durch die Auslassöffnungen 16 in dem Ventilgehäuse 2. Dabei haben sich vier Auslassöffnungen 16 in dem Ventilgehäuse 2 als besonders vorteilhaft hinsichtlich der Entstehung von Turbulenz und damit verbundenen Strömungsgeräuschen erwiesen. In dem Ausführungsbeispiel von Fig. 1 ist der Ventilsitz 4 als separates Element ausgeführt. Der Fachmann weiß jedoch, dass der Ventilsitz 4 auch integral mit dem Ventilgehäuse 2 sein kann.

Fig. 2 zeigt die Spindel 6 des in Fig. 1 im Ganzen gezeigten Ausführungsbeispiels des erfindungsgemäßen Absperrventils 1 im Detail. Die Spindel 6 weist einen umlaufenden Vorsprung 15 auf, welcher mit Zungen 14 in einer Öffnung in dem Ventilgehäuse 2 derart zusammenwirkt, dass eine axiale Bewegung der Spindel 6 in das Ventilgehäuse 2 hinein verhindert wird. In Fig. 2 ist außerdem das Gewinde 17 der Spindel 6 gezeigt, welches in ein entsprechendes Gewinde 18 des Kolbenträgers 5 eingreift, und eine Drehbewegung der Spindel 6 in eine axiale Bewegung des Kolbenträgers 5 transformiert.

Fig. 3 zeigt den Kolbenträger 5 im Detail. Das Gewinde 17 der Spindel 6 greift in ein Innengewinde 18 in dem Kolbenträger 5 ein. Damit eine Drehbewegung der Spindel 6 in eine axiale Bewegung des Kolbenträgers 5 umgewandelt werden kann, muss verhindert werden, dass sich der Kolbenträger 5 mitdreht. Dies erfolgt in dem gezeigten Ausführungsbeispiel durch Vorsprünge 19 an dem Kolbenträger 5. Diese Vorsprünge 19 gleiten in entsprechende Vertiefungen in der Innenwand des Ventilgehäuses 2 in axialer Richtung. Die Funktion der Rutschkupplung wird in dem gezeigten Ausführungsbeispiel erfüllt, indem bei Überschreiten eines bestimmten Drehmoments, die Vorsprünge 19 jeweils von einer derzeitigen Vertiefung zu einer benachbarten Vertiefung bewegt werden. Das heißt bei Überschreiten eines bestimmten Drehmoments dreht sich der Kolbenträger 5 mit, wodurch das Drehmoment begrenzt wird.

Die Spindel 6 (vgl. Fig. 2) weist in dem Ausführungsbeispiel einen Vorsprung 20 auf, und der Kolbenträger einen entsprechenden Vorsprung 21. Ein Vorsprung ist in diesem Zusammenhang jegliches Mittel, welches von einem Rest hervorsteht. Dabei kann der Vorsprung auch mit Hilfe von Ausnehmungen gebildet werden. In einer ersten Endstellung ist die Spindel 6 möglichst weit aus dem Kolbenträger 5 herausgeschraubt. In diesem Fall stößt die vorspringende Kante 20 an der Spindel 6 gegen eine entsprechende vorspringende Kante 21 (vgl. Fig. 3) an dem Kolbenträger 5. Dies führt dazu, dass die Spindel nicht weiter aus dem Kolbenträger heraus geschraubt werden kann. Stattdessen dreht sich der Kolbenträger 5 mit der Spindel 6 mit.

Entsprechende Mittel gibt es in dem vorliegenden Ausführungsbeispiel auch an anderen Stellen der Spindel 6 und des Kolbenträgers 5. Mit diesen Mitteln wird ein Übergang von einer axialen Bewegung des Kolbenträgers 5 in eine radiale Bewegung erzielt, wenn die Spindel 6 möglichst weit in den Kolbenträger 5 hineingeschraubt ist. In diesem Beispiel ist das Mittel bzw. der Vorsprung an der Spindel 6 einfach das Ende 22 des Gewindes 17 der Spindel 6. In der hineingeschraubten Position stößt dieses Ende 22 gegen das Innengewinde (vgl. Fig. 3) des Kolbenträgers 5. Die radiale Bewegung des Kolbenträgers 4 wird durch die bereits beschriebene Rutschkupplung ermöglicht.

## Patentansprüche

1. Absperrventil (1) für ein Fluid aufweisend ein Ventilgehäuse (2), einen Ventilkolben (3), einen an einem Ende des Ventilgehäuses (2) angeordneten Ventilsitz (4) und einen den Ventilkolben (3) aufnehmenden Kolbenträger (5), wobei der Kolbenträger (5) mittels einer Spindel (6) axial in dem Ventilgehäuse (2) verschiebbar ist, wobei zumindest das Ventilgehäuse (2), der Ventilkolben (3), der Ventilsitz (4) und der Kolbenträger (5) aus Kunststoff bestehen und wobei der Kolbenträger (5) derart die Innenwand des Ventilgehäuses (2) kontaktiert, dass er bei Überschreiten eines bestimmten Drehmoments eine radiale Bewegung ausführt
**dadurch gekennzeichnet, dass**
auf dem Ventilkolben (3) eine ringförmige Dichtung (7) angeordnet ist, welche mit einem abgeschrägten Rand (8) einer Öffnung (9) in dem Ventilsitz (4) derart zusammenwirkt, dass das Fluid am Durchströmen der Öffnung (9) gehindert wird, wenn sich der Ventilkolben (3) in einer Endstellung befindet, und dass
der Ventilkolben (3) eine Ausnehmung (10) aufweist, welche ein Ende der Spindel (6) aufnehmen kann und der Kolbenträger (5) an einem Ende, welches dem Ventilkolben (3) zugewandt ist, eine Öffnung (11) aufweist durch welche das Ende der Spindel (6) sich in die Ausnehmung (10) des Ventilkolbens (3) bewegen kann.

2. Absperrventil (1) nach Anspruch 1, **dadurch gekennzeichnet, dass** der abgeschrägte Rand (8) der Öffnung (9) in dem Ventilsitz (4) die Form einer Mantelfläche eines Kegelstumpfs aufweist.

3. Absperrventil (1) nach Anspruch 2, **dadurch gekennzeichnet, dass** der Normalenvektor der Mantelfläche einen Winkel zwischen 30° und 60° mit der Drehachse des Absperrventils (1) bildet.

4. Absperrventil (1) nach Anspruch 2, **dadurch gekennzeichnet, dass** der Normalenvektor der Mantelfläche einen Winkel von 45° mit der Drehachse des Absperrventils (1) bildet.

5. Absperrventil (1) nach einem der vorangehenden Ansprüche, **dadurch gekennzeichnet, dass** die ringförmige Dichtung (7) die Form eines Torus aufweist.

6. Absperrventil (1) nach einem der vorangehenden Ansprüche, **dadurch gekennzeichnet, dass** der Ventilkolben (3) derart mit dem Kolbenträger (5) verbunden ist, dass sie sich gegeneinander verdrehen lassen.

7. Absperrventil (1) nach Anspruch 1, **dadurch gekennzeichnet, dass** der Kolbenträger (5) an einem Ende als Kranz mit einem umlaufenden Vorsprung (12) geformt ist und der Ventilkolben (3) an einem Ende in Form von Zungen (13) geformt ist, welche mit dem umlaufenden Vorsprung (12) an dem Kranz an dem Ende des Kolbenträgers (5) derart zusammenwirken, dass eine drehbare Verbindung zwischen dem Ventilkolben (3) und dem Kolbenträger (5) gegeben ist.

8. Absperrventil (1) nach einem der vorangehenden Ansprüche, **dadurch gekennzeichnet, dass** das Ventilgehäuse (2) eine Öffnung aufweist, an der Zungen (14) ausgebildet sind, welche derart elastisch sind, dass die Spindel (6) beim Zusammenbau zumindest teilweise durch die Öffnung des Ventilgehäuses (2) geschoben werden kann und die Zungen (14) im eingeschobenen Zustand der Spindel (6) mit einem umlaufenden Vorsprung (15) an der Spindel (6) derart zusammenwirken, dass eine axiale Bewegung der Spindel (6) in das Ventilgehäuse (2) hinein verhindert wird.

9. Absperrventil (1) nach einem der vorangehenden Ansprüche, **dadurch gekennzeichnet, dass** die Spindel (6) aus zwei Teilen besteht, wobei das erste Teil zumindest teilweise aus dem Ventilgehäuse (2) herausragt und aus Messing besteht und das zweite Teil den Kolbenträger (5) in dem Ventilgehäuse (2) kontaktiert und aus Kunststoff besteht und wobei die zwei Teile derart miteinander verbunden sind, dass sie sich nicht gegeneinander verdrehen lassen.

10. Absperrventil (1) nach einem der vorangehenden Ansprüche, **dadurch gekennzeichnet, dass** das Ventilgehäuse (2) aus einem Stück gefertigt ist.

11. Absperrventil (1) nach einem der vorangehenden Ansprüche, **dadurch gekennzeichnet, dass** das Ventilgehäuse (2) Auslassöffnungen (16) für das Fluid aufweist.

## Claims

1. Shut-off valve (1) for a fluid comprising a valve housing (2), a valve piston (3), a valve seat (4) arranged at an end of the valve housing (2) and a piston carrier (5) for accommodating the valve piston (3), wherein the piston carrier (5) is axially movable in the valve housing (2) by means of a spindle (6), wherein at least the valve housing (2), the valve piston (3), the valve seat (4) and the piston carrier (5) consist of plastic and wherein the piston carrier (5) contacts the inner wall of the valve housing (2), such that the piston carrier (5) performs a radial movement when exceeding a certain torque
**characterized in that**
an annular sealing (7) is arranged at the valve piston (3) which interacts with a beveled edge (8) of an opening (9) in the valve seat (4), such that the fluid is prevented from flowing through the opening (9), when the valve piston (3) is in an end position, and **in that**
the valve piston (3) comprises a recess (10), which is adapted to house an end of the spindle (6), and the piston carrier (5) comprises at an end facing the valve piston (3) an opening (11) through which the end of the spindle (6) may move into the recess (10) of the valve piston (3).

2. Shut-off valve (1) according to claim 1, **characterized in that** the beveled edge (8) of the opening (9) in the valve housing (4) has the form of a lateral surface of a frustrum of a cone.

3. Shut-off valve (1) according to claim 2, **characterized in that** the normal vector of the lateral surface forms an angle with the rotational axis of the shut-off valve (1) between 30° and 60°.

4. Shut-off valve (1) according to claim 2, **characterized in that** the normal vector of the lateral surface forms an angle with the rotational axis of the shut-off valve (1) o 45°.

5. Shut-off valve (1) according to anyone of the preceding claims, **characterized in that** the annular sealing (7) has the form of a torus.

6. Shut-off valve (1) according to anyone of the preceding claims, **characterized in that** the valve piston (3) is connected with the piston carrier (5), such that they may be rotated against each other.

7. Shut-off valve (1) according to claim 1, **characterized in that** the piston carrier (5) is formed at an end as a collar with a circumferential projection (12) and that the valve piston (3) is formed at an end in the form of tongues (13), which interact with the circumferential projection (12) at the collar at the end of the piston carrier (5), such that a rotatable connection between the valve piston (3) and the piston carrier (5) is realized.

8. Shut-off valve (1) according to anyone of the preceding claims, **characterized in that** the valve housing (2) comprises an opening at which tongues (14) are formed which are elastic, such that the spindle (6) may be moved at least partially through the opening of the valve housing (2), when assembling the valve, and the tongues (14) in the inserted state of the spindle (6) interact with a circumferential protrusion (15) at the spindle (6), such that an axial movement of the spindle (6) into the valve housing (2) is prevented.

9. Shut-off valve (1) according to anyone of the preceding claims, **characterized in that** the spindle (6) consists of two parts, wherein the first part protrudes at least partially from the valve housing (2) and consists of brass, and the second part contacts the piston carrier (5) in the valve housing (2) and consists of plastic and wherein the two parts are connected with one another in such a manner that the parts may not be rotated against each other.

10. Shut-off valve (1) according to anyone of the preceding claims, **characterized in that** the valve housing (2) is made of a single piece.

11. Shut-off valve (1) according to anyone of the preceding claims, **characterized in that** the valve housing (2) comprises outlets (16) for the fluid.

## Revendications

1. Soupape d'arrêt (1) pour un fluide, comportant un corps de soupape (2), un piston de soupape (3), un siège de soupape (4) disposé à une extrémité du corps de soupape (2) et un support de piston (5) recevant le piston de soupape (3), le support de piston (5) pouvant coulisser axialement dans le corps de soupape (2) au moyen d'une tige (6), au moins le corps de soupape (2), le piston de soupape (3), le siège de soupape (4) et le support de piston (5) étant en matière plastique, et le support de piston (5) étant en contact avec la paroi intérieure du corps de soupape (2) de manière à effectuer un mouvement radial en cas de dépassement d'un couple déterminé, **caractérisée en ce qu'**un joint annulaire (7) est disposé sur le piston de soupape (3) et coopère avec un bord chanfreiné (8) d'une ouverture (9) ménagée dans le siège de soupape (4), de manière que le fluide soit empêché de passer à travers l'ouverture (9) quand le piston de soupape (3) se trouve dans une position extrême, et **en ce que** le piston de soupape (3) est pourvu d'un évidement (10) qui peut recevoir une extrémité de la tige (6) et le support de piston (5) présente, à une extrémité tournée vers le piston de soupape (3), une ouverture (11) à travers laquelle l'extrémité de la tige (6) peut se déplacer dans l'évidement (10) du piston de soupape (3).

2. Soupape d'arrêt (1) selon la revendication 1, **caractérisée en ce que** le bord chanfreiné (8) de l'ouverture (9) dans le siège de soupape (4) présente la forme d'une surface latérale d'un tronc de cône.

3. Soupape d'arrêt (1) selon la revendication 2, **caractérisée en ce que** le vecteur normal de la surface latérale forme un angle compris entre 30° et 60° avec l'axe de rotation de la soupape d'arrêt (1).

4. Soupape d'arrêt (1) selon la revendication 2, **caractérisée en ce que** le vecteur normal de la surface latérale forme un angle de 45° avec l'axe de rotation de la soupape d'arrêt (1).

5. Soupape d'arrêt (1) selon une des revendications précédentes, **caractérisée en ce que** le joint annulaire (7) présente la forme d'un tore.

6. Soupape d'arrêt (1) selon une des revendications précédentes, **caractérisée en ce que** le piston de soupape (3) est relié au support de piston (5) de manière qu'ils puissent tourner l'un par rapport à l'autre.

7. Soupape d'arrêt (1) selon la revendication 1, **caractérisée en ce que** le support de piston (5) est formé à une extrémité comme une couronne avec une saillie périphérique (12), et le piston de soupape (3) est formé à une extrémité en forme de languettes (13) qui coopèrent avec la saillie périphérique (12) sur la couronne à l'extrémité du support de piston (5), de manière qu'il existe une liaison tournante entre le piston de soupape (3) et le support de piston (5).

8. Soupape d'arrêt (1) selon une des revendications précédentes, **caractérisée en ce que** le corps de soupape (2) présente une ouverture sur laquelle sont formées des languettes (14) qui sont élastiques de manière que, lors de l'assemblage, la tige (6) puisse être poussée au moins partiellement à travers l'ouverture du corps de soupape (2) et, lorsque la tige (6) est introduite dans l'ouverture, les languettes (14) coopèrent avec une saillie périphérique (15) sur la tige (6) de manière à empêcher un mouvement axial de la tige (6) dans le corps de soupape (2).

9. Soupape d'arrêt (1) selon une des revendications précédentes, **caractérisée en ce que** la tige (6) est composée de deux parties, la première partie dépassant au moins partiellement du corps de soupape (2) et étant en laiton, et la deuxième partie étant en contact avec le support de piston (5) dans le corps de soupape (2) et étant en matière plastique, et les deux parties étant reliées entre elles de manière à ne pas pouvoir tourner l'une par rapport à l'autre.

10. Soupape d'arrêt (1) selon une des revendications précédentes, **caractérisée en ce que** le corps de soupape (2) est réalisé d'une seule pièce.

11. Soupape d'arrêt (1) selon une des revendications précédentes, **caractérisée en ce que** le corps de soupape (2) présente des ouvertures de sortie (16) pour le fluide.
